# NEW EUROPEAN PATENT SPECIFICATION

(11) **EP 2 340 103 B2**
(45) Date of publication and mention of the opposition decision: **22.07.2020**
(45) Mention of the grant of the patent: 03.12.2014
(21) Application number: 09737470.6
(22) Date of filing: 13.10.2009
(51) Int. Cl.: B01D 53/94, B01J 23/72, B01J 29/072, B01J 29/76

(54) **A METHOD OF CONVERTING NITROGEN OXIDES WITH TRANSITION METAL-CONTAINING ALUMINOSILICATE ZEOLITE**
VERFAHREN ZUR UMWANDELN VON STICKSTOFFOXIDEN MIT ÜBERGANGSMETALLHALTIGEM ALUMINOSILICAT-ZEOLITH
PROCEDE DE CONVERSION D'OXYDES D'AZOTE AVEC UNE ZÉOLITE ALUMINOSILICATE RENFERMANT UN MÉTAL DE TRANSITION

(30) Priority: 15.10.2008 GB 0818887
(43) Date of publication of application: 06.07.2011
(60) Divisional application: 14195686.2
(73) Proprietor: JOHNSON MATTHEY PUBLIC LIMITED COMPANY, London EC4A 4AB (GB)
(72) Inventor: CHANDLER, Guy, Richard, Cambridgeshire CB23 1HB (GB); COLLINS, Neil, Robert, Litlington SG8 0QL (GB); FOO KOK SHIN, Rodney, Reading Berkshire RG4 9NH (GB); GREEN, Alexander, Nicholas, Michael, Baldock SG7 5AL (GB); PHILLIPS, Paul, Richard, Royston SG8 5YR (GB); RAJARAM, Raj Rao, Slough SL3 7PH (GB); REID, Stuart, David, Cambourne CB23 5JA (GB)
(74) Representative: Nunn, Andrew Dominic
(86) International application number: PCT/GB2009/051361
(87) International publication number: WO 2010/043891

(56) References cited:
- EP-A2- 0 373 665
- EP-A2- 0 462 598
- WO-A1-99/39809
- WO-A1-2009/099937
- WO-A1-2009/141324
- WO-A1-2012/145323
- WO-A2-2008/083126
- WO-A2-2008/083126
- WO-A2-2008/106523
- WO-A2-2008/132452
- WO-A2-2011/084218
- US-A- 4 046 888
- US-A- 4 297 328
- US-A- 4 912 776
- US-A1- 2005 031 514
- US-A1- 2005 197 520
- US-A1- 2006 115 403
- US-A1- 2007 100 185
- US-A1- 2008 202 107
- US-A1- 2008 226 545
- US-A1- 2008 241 060
- US-A1- 2020 039 550
- ROBSON, H.: Verified Syntheses of Zeolitic Materials, 2001, pages 126-127,
- Kasaoka, S.: "Effect of Inlet NO/NO2 Molar Ratio and Contribution of Oxygen in the Catalytic Reduction of Nitrogen Oxides with Ammonia", , no. 6, 1978, pages 874-881,
- Zones, S. et al: Zeolites, vol. 8, 1988, pages 166-174,
- Mullin, J.: Crystallization, 3 Ed., 1992, pages 71-80,
- Kirk-Othmer: "Size Measurement of Particles", Encyclopedia of Chemical Technology, 4th Ed., 1997, pages 256-278,
- Solyman, S. M. et al: "Performance of ultrasonic-treated nano-zeolites employed in the preparation of dimethyl ether", Egyptian Journal of Petroleum, 2013, pages 91-99,
- Oprea C. et al: "Investigation of nanocrystals using tem micrographs and electron diffraction technique", Rom. Journ. Phys., vol. 53, no. 1-2, 2008, pages 223-230,
- Guisnet, M. et al: "ZEOLITES FOR CLEANER TECHNOLOGIES", Catalytic Science Series, vol. 3, 2002, pages 58-61,

## Description

The present invention relates to the selective catalytic reduction (SCR) of nitrogen oxides in exhaust gases, such as exhaust gases from internal combustion engines, using a nitrogenous reductant.

It is known to convert oxides of nitrogen (NOₓ) in a gas to nitrogen by contacting the NOₓ with a nitrogenous reducing agent, e.g. ammonia or an ammonia precursor such as urea, in the presence of a zeolite catalyst containing at least one transition metal, and it has been suggested to adopt this technique for treating NOₓ emitted from vehicular lean-burn internal combustion engines, see for example DieselNet Technology Guide "Selective Catalytic Reduction" Revision 2005.05d, by W. Addy Majewski published on www.dieselnet.com.

US patent no. 4,544, 538 discloses a synthetic zeolite having a crystal structure of chabazite (CHA), designated SSZ-13 prepared using a Structure Directing Agent (SDA) such as the N,N,N-trimethyl-1-adamantammonium cation. The SSZ-13 can be ion exchanged with transition metals such as rare earth, Mn, Ca, Mg, Zn, Cd, Pt, Pd, Ni, Co, Ti, Al, Sn, Fe and Co for use e.g. in hydrocarbon conversion reactions.

US patent no. 6,709,644 discloses a synthetic zeolite having a crystal structure of chabazite (CHA) of small crystallite size (on average <0.5 micrometers) designated SSZ-62. SSZ-62 can also be prepared using the N,N,N-trimethyl-1-adamantammonium cation SDA. Example 1 of US 6,709,644 compares the average crystal size of SSZ-62 with the average crystal size of SSZ-13. The document suggests that SSZ-62 can be used in a process for converting lower alcohols or the zeolite can be exchanged with copper or cobalt for use in catalysing the reduction of NOₓ in a lean gas stream e.g. of an internal combustion engine. However, the activity of small and large crystallite size materials are only illustrated by a methanol to olefin reaction.

In our WO 2008/132452 A2 we explain that transition metal/zeolite catalysts such as Cu/Beta and/or Fe/Beta are being considered for urea and/or NH₃ SCR of NO_{X} from mobile diesel engines to meet new emission standards. These catalysts are required to withstand relatively high temperatures under exhaust conditions, and may also be exposed to relatively high levels of hydrocarbons (HC), which can be adsorbed onto or into the pores of the zeolites. The adsorbed HC may affect the NH₃ SCR activities of these metal zeolites catalysts by blocking the active sites or blocking access to the active sites for the NH₃-NOₓ reaction. Furthermore, these adsorbed HC species may be oxidised as the temperature of the catalytic system is raised, generating a significant exotherm, which can thermally or hydrothermally damage the catalyst. It is therefore desirable to minimise HC adsorption on the SCR catalyst, especially during cold start when significant amounts of HC can be emitted from the engine.

In our WO 2008/132452 A2 we suggest that both of these disadvantages of larger pore zeolite catalysts can be reduced or overcome by using small pore zeolites, which generally allow the diffusion of NH₃ and NOₓ to the active sites inside the zeolite pores, but which generally hinder diffusion of hydrocarbon molecules into the pores. Zeolites that have the small pore dimensions to induce this shape selectivity whereby larger hydrocarbons are prevented from accessing the active metal sites within the zeolite cavities include CHA, ERI and LEV. Additionally, small pore zeolite-based SCR catalysts produce less N₂O as a by-product of the NOₓ reduction reaction.

WO 2008/106523 describes catalysts, methods and systems for treating diesel engine exhaust stream. In one or more embodiments, the catalyst comprises platinum, a second metal from one of the groups VB, VIB, VIIB, VIIIB, IB, or IIB of the periodic table, a refractory metal oxide, and a zeolite, the oxidation catalyst already being effective to remove ammonia at temperatures less than about 300°C and exhibiting no significant decrease in ammonia oxidation efficiency upon hydrothermal aging. A method aspect includes first passing a vehicle's engine exhaust stream through a NOx abatement catalyst; and passing the exhaust stream exiting the NOₓ abatement catalyst and containing ammonia through the ammonia oxidation catalyst. Systems including such catalysts are also described.

WO 2008/083126 discloses a process for reducing cold start emissions in an exhaust gas stream (such as from an internal combustion engine) by contacting the exhaust stream with a combination of molecular sieves (1) a small pore crystalline molecular sieve or mixture of molecular sieves having pores no larger than 8 membered rings selected from the group consisting of SSZ-13, SSZ-16, SSZ-36, SSZ-39, SSZ-50, SSZ-52 and SSZ-73 molecular sieve and having a mole ratio of at least 10 of (a) an oxide of a first tetravalent element to (b) an oxide of a trivalent element, pentavalent element, second tetravalent element which is different from said first tetravalent element or mixture thereof and (2) a medium-large pore crystalline molecular sieve having pores at least as large as 10 membered rings selected from the group consisting of SSZ-26, SSZ-33, SSZ-64, zeolite Beta, CIT-1,; CIT-6 and ITQ-4 and having a mole ratio of at least 10 of (a) an oxide of a first tetravalent element to (b) an oxide of a trivalent element, pentavalent element, second tetravalent element which is different from said first tetravalent element or mixture thereof.

WO 2009/099937 discloses catalysts comprising metal-loaded non-zeolitic molecular sieves having the CHA crystal structure, including Cu-SAPO-34, methods for preparing such catalysts, and systems and methods for treating exhaust gas incorporating such catalysts. The catalysts can be used to remove nitrogen oxides from a gaseous medium across a broad temperature range and exhibit hydrothermal stability at high reaction temperatures. Comparative Example 15 discloses a zeolitic CuCHA.

We have researched into aluminosilicate zeolite materials and have discovered, very surprisingly, that large crystallite aluminosilicate zeolite materials have higher activity for the SCR process using a nitrogenous reductant than the same aluminosilicate zeolite material of smaller crystallite size.

The invention provides a method as defined in the claims appended hereto. In embodiments, the zeolite can contain both copper and iron.

The Examples show a trend of increasing NOₓ reduction activity of fresh and aged copper/CHA catalysts with increasing crystallite size.

Scanning electron microscopy can determine the morphology and crystallite size of zeolites according to the invention. The mean particle size of the aluminosilicate zeolite as measured by SEM is >0.50 micrometer, but preferably greater than 1.00 micrometer. The mean crystallite size is <5.0 micrometers.

The aluminosilicate zeolite of the CHA Framework Type Code can be an isotype framework structure of CHA selected from the group consisting of, for example, Linde-D, Linde-R, SSZ-13, LZ-218, Phi and ZK-14.

The total at least one transition metal present in the catalyst is 0.5 to 5.0 wt% based on the total weight of the zeolite catalyst.

The nitrogen oxides can be reduced with the reducing agent at a temperature of at least 100°C, for example from about 150°C to 750°C.

In a particular embodiment, the nitrogen oxides reduction is performed in the presence of oxygen.

The addition of nitrogenous reductant can be controlled so that NH₃ at the zeolite catalyst inlet is controlled to be 60% to 200% of theoretical ammonia calculated at 1:1 NH₃/NO and 4:3 NH₃/NO₂.

The nitrogen monoxide in the gas is oxidised to nitrogen dioxide using an oxidation catalyst located upstream of the zeolite catalyst and the resulting gas is then mixed with nitrogenous reductant before the mixture is fed into the zeolite catalyst, wherein the oxidation catalyst is adapted to yield a gas stream entering the zeolite catalyst having a ratio of NO to NO₂ of from 4:1 to 1:3 by volume.

In the method according to the invention, the nitrogenous reductant can be ammonia *per se,* hydrazine or an ammonia precursor selected from the group consisting of urea ((NH₂)₂CO), ammonium carbonate, ammonium carbamate, ammonium hydrogen carbonate and ammonium formate.

The gas containing nitrogen oxides to be treated with the method according to the present invention can be derived from a combustion process, particularly from an internal combustion engine such as a stationary source or preferably a vehicular lean burn internal combustion engine.

There is described herein an exhaust system for a vehicular lean-burn internal combustion engine, which system comprising a conduit for carrying a flowing exhaust gas, a source of nitrogenous reductant, a synthetic aluminosilicate zeolite catalyst according to the invention, disposed in a flow path of the exhaust gas and means for metering nitrogenous reductant into a flowing exhaust gas upstream of the zeolite catalyst.

In order that the invention may be more fully understood, the following reference Examples are provided by way of illustration only.

### Example 1 - Preparation of zeolite samples

### Zeolite A

Small crystallite CHA was prepared according to Example 1 of US 6709644.

### Zeolite B

Large crystallite CHA was prepared according to a method of making SSZ-13 by S.I. Zones and R A. Van Nordstrand, Zeolites 8 (1988) 166 also published on International Zeolite Association Synthesis Commission web-site http://www.iza-online.org/synthesis/, as follows:

**The source materials were:**
sodium hydroxide (1 N), (Baker, reagent grade);
N,N,N, trimethyl-1-adamantanammonium hydroxide (RN-OH)(O.72M); deionized water;
aluminium hydroxide (Reheis F-2000 dried gel, 50% Al₂O₃); and fumed silica (Cab-Q-Sil, M5 grade, 97% SiO₂).

**The reaction mixture was prepared as follows:**
1. (1) 2.00 g 1N NaOH + 2.78 g 0.72 M RN OH + 3.22g water, add sequentially to a Teflon cup of a Parr 23 mL autoclave;
2. (2) (1) + 0.05 g aluminum hydroxide, mix until solution clears;
3. (3) (2) + 0.60 g fumed silica, mix until uniform.

**The reaction mixture was crystallised:**
in a teflon-lined 23 mL autoclave (Parr model 4745) at a temperature of 160°C for 4 days without agitation;
After cooling to room temperature the mixture was filtered, washed with de-mineralised water and air-dried overnight.

**The resulting product was characterised by powder x-ray diffraction and identified as:**
CHA zeolite with a SiO₂/Al₂O₃ ratio of 28 as determined by ICP.

**SEM analysis showed:**
cubes of 2-5 micrometers.

### Zeolite C

A reaction mixture was prepared of molar composition 60 SiO₂ - 1.5 Al₂O₃ - 6 Na₂O - 12 NNNAnOH - 2640 H₂O, where NNNAnOH is the structure directing agent (SDA) or template N,N,N-trimethyladamantanammonium hydroxide

The reaction was prepared using cab-o-sil M5 (Cabot Corporation) as the source of silica, sodium aluminate (BDH Ltd), sodium hydroxide (Alfa Aesar). The SDA (NNNAnOH) was prepared following the method described in US patent no. 4,544,538. The required amount of the SDA solution was weighed out and the NaOH added and stirred until it dissolved. The sodium aluminate solid was then added with stirring and stirring was continued until it dissolved. The cab-o-sil was then mixed in and the resulting mixture transferred to a 1L stainless steel autoclave. The autoclave was sealed and the mixture heated to 165C with stirring (300rpm) for 4 days.

The resulting product was identified as a CHA type material by powder x-ray diffraction. Visually, the product crystals were approximately 2 microns on edge. The product composition had a silica-alumina ratio (SAR) of 24:1.

### Example 2 - Preparation of 3wt%Cu/aluminosilicate zeolite

Copper was deposited on zeolites A, B and C prepared according to Example 1 by the standard wet impregnation method using copper acetate as the copper precursor. For 10g of aluminosilicate zeolite, 0.471g of copper acetate was dissolved in a sufficient amount of water to wet the aluminosilicate zeolite material. The solution was added to the aluminosilicate zeolite material and stirred. The wet powder was dried at 105°C, before being calcined at 500°C for 2 hours. Following calcination, a majority of the copper is understood to be present as copper (II) oxide.

The copper-loaded catalysts prepared according to this Example were designated as Catalysts A, B and C. Catalysts prepared according to Example 2 are referred to as "Fresh Catalysts A-C".

### Example 3 - Hydrothermal Ageing

Fresh Catalysts A-C prepared according to Example 2 were hydrothermally aged in an atmosphere containing 10% oxygen, 10% water, balance nitrogen at 750°C for a period of 24 hours. The hydrothermally aged catalyst is referred to as "Aged Catalysts A-C".

**Table 1: surface area, silica alumina ratio, crystal size and copper loading of the different catalysts (fresh).**

| **Chabazite Aluminosilicate code** | **BET surface area** | **Silica to alumina ratio (SAR)** | **Average SEM Crystal Dimension (micrometer)*** | **Cu loading wt%** |
|---|---|---|---|---|
| A | 784 | 26 | 0.15 | 3 |
| B | 634 | 24 | 0.5 | 3 |
| C | 616 | 24 | 1.4 | 3 |
| * The samples were dispersed in methanol and subjected to ultrasound for 20 mins and a drop of this liquid was put on a standard carbon padded Scanning Electron Microscope (SEM) stub. Counting and sizing was determined by number averaged digital particle size analysis, based on "thresholding" the intensities from each pixel of an image, and exploiting the differences in intensity between particles and the background. The software assumes that each object detected is circular/spherical. | | | | |

### Example 4 - Activity Tests

The NOₓ conversion of Catalysts A-C of Examples 2 and 3 at an inlet gas temperature of 200°C or 400°C are given in Table 2. The NOₓ reduction performance was measured on a powder sample in a laboratory reactor by ramping the catalyst at 5°C per minute in a gas mixture containing 500ppm NO and NH₃, 10%O₂, 10%H₂O and N₂.

**Table 2: NOₓ conversion at a catalyst inlet gas temperature of 200°C and 400°C for Fresh and 750°C 24 hour-Aged Conditions**

| **Catalyst** | **SAR** | **Average SEM Crystal Dimension (micrometer)** † | **Cu Loading wt%** | **500°C Calcined % NOx Conversion** | | | **750°C Aged % NOx Conversion** | | |
|---|---|---|---|---|---|---|---|---|---|
| | | | | **190°C** | **200°C 400°C** | | **190°C** | **200°C** | **400°C** |
| A | 26 | 0.15 | 3 | 73 | 86 | 99 | 44 | 58 | 96 |
| B | 24 | 0.5 | 3 | 85 | 95 | 99 | 51 | 66 | 97 |
| C | 24 | 1.4 | 3 | 87 | 97 | 99 | 68 | 83 | 99 |
| † See notes on Table 1. | | | | | | | | | |

It can be seen from Table 2 that the activity of the catalysts generally follows a trend of increasing activity with crystallite size. Hence we conclude that larger crystallite size aluminosilicate zeolite materials are surprisingly more active either fresh or hydrothermally aged than catalysts prepared from smaller crystals of the same aluminosilicate zeolite material.

## Claims

1. A method of converting nitrogen oxides in a gas to nitrogen by contacting the nitrogen oxides with a nitrogenous reducing agent in the presence of a synthetic aluminosilicate zeolite catalyst,
the synthetic aluminosilicate zeolite catalyst containing at least one catalytically active transition metal, which is copper, which aluminosilicate zeolite is a small pore aluminosilicate zeolite having a maximum ring size of eight tetrahedral atoms, which has the Framework Type Code CHA, wherein the mean crystallite size of the aluminosilicate zeolite determined by scanning electron microscope is >0.50 micrometer and <5.0 micrometers, wherein the total at least one transition metal present in the catalyst is from 0.5 to 5.0 wt% based on the total weight of the zeolite catalyst,
wherein nitrogen monoxide in the gas is oxidised to nitrogen dioxide using an oxidation catalyst located upstream of the zeolite catalyst and the resulting gas is then mixed with nitrogenous reductant before the mixture is fed into the zeolite catalyst, and wherein the oxidation catalyst is adapted to yield a gas stream entering the zeolite catalyst having a ratio of NO to NO₂ of from 4:1 to 1:3 by volume.

2. A method according to claim 1, wherein the nitrogen oxides reduction is performed in the presence of oxygen.

3. A method according to claim 1 or claim 2, wherein the nitrogenous reductant is ammonia per se, hydrazine or an ammonia precursor selected from the group consisting of urea ((NH₂)₂CO), ammonium carbonate, ammonium carbamate, ammonium hydrogen carbonate and ammonium formate.

4. The method according to any preceding claim, wherein the mean crystallite size is >1.00 micrometer

5. The method according to any preceding claim, wherein isotype framework structures of CHA are selected from the group consisting of Linde-D, Linde-R, SSZ-13, LZ-218, Phi and ZK-14.

## Patentansprüche

1. Verfahren zum Umwandeln von Stickstoffoxiden in einem Gas in Stickstoff durch Inkontaktbringen der Stickstoffoxide mit einem stickstoffhaltigen Reduktionsmittel in Gegenwart eines synthetischen Aluminiumsilicat-Zeolith-Katalysators,
wobei der synthetische Aluminiumsilicat-Zeolith-Katalysator mindestens ein katalytisch aktives Übergangsmetall enthält, bei dem es sich um Kupfer handelt, wobei der Aluminiumsilicat-Zeolith ein kleinporiger Aluminiumsilicat-Zeolith mit einer maximalen Ringgröße von acht tetraedrischen Atomen ist, der den Gerüsttyp-Code CHA hat, wobei die mit einem Rasterelektronenmikroskop bestimmte mittlere Kristallitgröße des Aluminiumsilicat-Zeolithen >0,50 Mikrometer und <5,0 Mikrometer beträgt, wobei die Gesamtmenge des in dem Katalysator vorliegenden mindestens einen Übergangsmetalls von 0,5 bis 5,0 Gew.-% beträgt, bezogen auf das Gesamtgewicht des Zeolith-Katalysators,
wobei Stickstoffmonoxid in dem Gas unter Verwendung eines Oxidationskatalysators, der sich stromaufwärts des Zeolith-Katalysators befindet, zu Stickstoffdioxid oxidiert wird und das resultierende Gas dann mit stickstoffhaltigem Reduktor gemischt wird, bevor das Gemisch in den Zeolith-Katalysator eingespeist wird, und wobei der Oxidationskatalysator dazu geeignet ist, einen Gasstrom, der in den Zeolith-Katalysatoren einströmt, mit einem Volumenverhältnis von NO zu NO₂ von 4:1 bis 1:3 zu ergeben.

2. Verfahren nach Anspruch 1, wobei die Reduktion der Stickstoffoxide in Gegenwart von Sauerstoff durchgeführt wird.

3. Verfahren nach Anspruch 1 oder 2, wobei der stickstoffhaltige Reduktor Ammoniak selbst, Hydrazin oder ein Ammoniakvorläufer ist, der aus der Gruppe bestehend aus Harnstoff ((NH₂)₂CO), Ammoniumcarbonat, Ammoniumcarbamat, Ammoniumhydrogencarbonat und Ammoniumformiat ausgewählt ist.

4. Verfahren nach einem vorhergehenden Anspruch, wobei die mittlere Kristallitgröße >1,00 Mikrometer ist.

5. Verfahren nach einem vorhergehenden Anspruch, wobei Isotypgerüststrukturen von CHA aus der Gruppe bestehend aus Linde-D, Linde-R, SSZ-13, LZ-218, Phi und ZK-14 ausgewählt ist.

## Revendications

1. Procédé de conversion d'oxydes d'azote dans un gaz en azote par mise en contact des oxydes d'azote avec un agent de réduction azoté en présence d'un catalyseur aluminosilicate synthétique type zéolite,
le catalyseur aluminosilicate synthétique type zéolite contenant au moins un métal de transition catalytiquement actif, qui est le cuivre, laquelle zéolite d'aluminosilicate étant une zéolite d'aluminosilicate à petit pores ayant une taille de cycle maximale de huit atomes tétraédriques, qui présente la topologie de charpente CHA, la taille moyenne de cristallite de la zéolite d'aluminosilicate déterminée par microscopie électronique à balayage étant > 0,50 micromètre et < 5,0 micromètres, le total d'au moins un métal de transition présent dans le catalyseur étant de 0,5 à 5,0 % en pds sur la base du poids total du catalyseur zéolite,
le monoxyde d'azote dans le gaz étant oxydé en dioxyde d'azote en utilisant un catalyseur d'oxydation localisé en amont du catalyseur zéolite et le gaz résultant étant ensuite mélangé avec l'agent de réduction azoté avant que le mélange soit alimenté dans le catalyseur zéolite, et le catalyseur d'oxydation étant adapté pour produire un écoulement de gaz entrant dans le catalyseur zéolite ayant un rapport de NO à NO₂ de 4:1 à 1:3 en volume.

2. Procédé selon la revendication 1, la réduction des oxydes d'azote étant effectuée en présence d'oxygène.

3. Procédé selon la revendication 1 ou la revendication 2, l'agent de réduction azoté étant l'ammoniac en soi, l'hydrazine ou un précurseur d'ammoniac sélectionné dans le groupe constitué de l'urée ((NH₂)₂CO), du carbonate d'ammonium, du carbamate d'ammonium, de l'hydrogénocarbonate d'ammonium et du formiate d'ammonium.

4. Procédé selon l'une quelconque des revendications précédentes, la taille moyenne de cristallite étant > 1,00 micromètre.

5. Procédé selon l'une quelconque des revendications précédentes, les structures de charpente des isotypes CHA étant sélectionnées dans le groupe constitué de Linde-D, Linde-R, SSZ-13, LZ-218, Phi et ZK-14.
